(19) Europäisches Patentamt
European Patent Office
Office européen des brevets

(11) **EP 2 131 475 A2**

(12) **EUROPÄISCHE PATENTANMELDUNG**

(43) Veröffentlichungstag:
**09.12.2009 Patentblatt 2009/50**

(51) Int Cl.:
***H02K 1/27*** *(2006.01)*

(21) Anmeldenummer: **09157353.5**

(22) Anmeldetag: **06.04.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **02.06.2008 DE 102008026375**

(71) Anmelder: **Siemens Aktiengesellschaft
80333 München (DE)**

(72) Erfinder:
- **Manowarda, Manfred
97616, Bad Neustadt (DE)**
- **Müller, Michael
97688, Bad Kissingen (DE)**

(54) **Rotor für eine elektrische Maschine**

(57) Die Erfindung betrifft einen Rotor (1) für eine elektrische Maschine (10), wobei
- der Rotor eine Polpaarzahl (p) aufweist, die mindestens zwei ist,
- jeweils zwei Erregerpole (2a,2b,3a,3b) bezüglich der Rotationsachse des Rotors im Wesentlichen diametral angeordnet sind und ein Polpaar bilden, wobei die jeweils zwei Erregerpole (2a,2b,3a,3b) eine gemeinsame Polpaarachse (4a,4b) aufweisen, die für beide Erregerpole eine Symmetrieachse darstellt,

**dadurch gekennzeichnet,**
**dass** eine erste Polpaarachse (4a) bezüglich einer zweiten Polpaarachse (4b) deren Erregerpole (2a,2b,3a,3b) zu den Erregerpolen (2a,2b,3a,3b) der ersten Polpaarachse (4a) benachbart angeordnet sind, um einen Winkel versetzt angeordnet sind, der von $\frac{360°}{2*p}$ um einen Verdrehwinkel ($\alpha$) abweicht.

FIG 2

EP 2 131 475 A2

**Beschreibung**

Die Erfindung betrifft einen Rotor für eine elektrische Maschine gemäß dem Oberbegriff des Anspruchs 1.

Permanentmagneterregte elektrische Maschinen weisen im Wesentlichen ein Primärteil und ein Sekundärteil auf, welche durch einen Luftspalt voneinander beabstandet sind. Das Primärteil ist diejenige Komponente, welche eine bestrombare ein- oder mehrphasige Wicklung aufweist. Das Sekundärteil weist Permanentmagnete auf, welche die Erregerpole zur Erzeugung eines magnetischen Erregerfeldes bilden.

Bei rotatorisch ausgeführten elektrischen Maschinen ist das Primärteil als Stator mit einer Wicklung und das Sekundärteil als Rotor mit Permanentmagneten ausgebildet. Stator und Rotor sind in der Regel zur Vermeidung von Wirbelstromverlusten mittels Blechpaketen, bestehend aus einer Vielzahl an einzelnen Elektroblechen, ausgebildet. Der Rotor ist beispielsweise auf eine Stahlwelle aufgepresst oder aufgeschrumpft.

Der Rotor weist Permanentmagnete auf, die entweder im Inneren des Rotors oder an der dem Stator zugewandten Oberfläche des Rotors angeordnet sind. Im Inneren des Rotors angeordnete Permanentmagnete werden auch als vergrabene Permanentmagnete bezeichnet.

Vergrabene Permanentmagnete werden in Vertiefungen, auch als Taschen bzw. Magnettaschen bezeichnet, welche das Rotorblechpaket aufweist, eingelassen oder eingeschoben, wobei anschließend in der Regel die für die Montage notwendigen Hohlräume durch ein Gießharz ausgefüllt werden. Dabei können die Permanentmagnete sowohl im magnetischen als auch im unmagnetischen Zustand in die Taschen eingebracht werden.

Es ist bekannt, dass permanentmagneterregte elektrische Maschinen eine starke Nutrastung aufweisen, die zu Rastmomenten führt. Der Effekt ist in der Regel unerwünscht, da Nutrastung bzw. Rastmomente eine größere Drehmomentwelligkeit, d.h. Schwankungen im Drehmoment, unruhigen Lauf sowie Geräuschentwicklung verursachen.

Bekannte Lösungen zur Verminderung des genannten Effekts sind beispielsweise Veränderung des Luftspalts, Anordnung von Schmetterlings- oder Brotlaibmagneten oder Schrägung/Staffelung von Stator oder Rotor.

Die Aufgabe der vorliegenden Erfindung ist es, einen Rotor für eine elektrische Maschine bereitzustellen, welcher so ausgebildet ist, dass bei guter Ausnutzung des vorhandenen Magnetmaterials im Rotor Nutrastung bzw. Rastmomente weitestgehend vermieden werden. Eine weitere Aufgabe der Erfindung ist es, eine elektrische Maschine mit einem solchen Rotor bereitzustellen.

Die Aufgaben werden durch die Merkmale des Patentanspruchs 1 gelöst. Vorteilhafte Weiterbildungen sind den Unteransprüchen zu entnehmen.

Der erfindungsgemäße Rotor für eine elektrische Maschine weist mindestens die Polpaarzahl zwei auf und hat damit zwangsläufig mindestens vier Erregerpole. Jeweils zwei dieser Erregerpole liegen sich gegenüber, so dass sie in Bezug auf die Rotationsachse des Läufers der elektrischen Maschine im Wesentlichen diametral zueinander angeordnet sind. Zwei derartig angeordnete Erregerpole werden im Sinne der Erfindung als Polpaar angesehen. Ein solches Polpaar hat eine gemeinsame Symmetrieachse für die beiden beteiligten Erregerpole, die naturgemäß die Rotationsachse schneidet. Diese Symmetrieachse wird als die gemeinsame Polpaarachse der besagten zwei Erregerpole angesehen.

Die obenstehende Definition eines Polpaares ist unabhängig von der Magnetisierung der beteiligten Erregerpole zu sehen.

Bei einer aus dem Stand der Technik bekannten Anordnung der Erregerpole wären die so definierten Polpaarachsen um einen Winkel gegeneinander versetzt angeordnet, der $\dfrac{360°}{2*p}$ beträgt. Durch eine solche Anordnung ergibt sich ein weitgehend rotationssymmetrischer Läufer.

Der Erfindung liegt nun die Erkenntnis zugrunde, dass die insbesondere bei permanenterregten elektrischen Maschinen auftretende unerwünschte Nutrastung deutlich reduziert werden kann, wenn von dieser symmetrischen Anordnung bzw. von dem angegebenen Versatzwinkel der Polpaarachsen um einen Verdrehwinkel $\alpha$ abgewichen wird. Durch geschickte Wahl des Winkels $\alpha$ lassen sich die Nutrastmomente zumindest teilweise, wenn nicht vollständig, kompensieren.

Bei anderen Lösungen ergibt sich in der Mehrheit eine geringere Ausnutzung des Magnetmaterials. Dies ist bei der erfindungsgemäßen Lösung nur in geringem Maße der Fall. Damit können aufgrund vergleichsweise geringeren Magnetvolumens Kosten eingespart werden.

Der Rotor ist insbesondere als Rotorblechpaket, bestehend aus einer Vielzahl an Blechen, wie Elektroblechen, zur Vermeidung von Wirbelstromverlusten ausgebildet und an einer Welle angeordnet. Im Rotorblechpaket sind Taschen bzw. Magnettaschen in einer axialen Richtung des Rotors ausgebildet, die zur Aufnahme von Magnetmaterial dienen. Die Anzahl der Magnettaschen kann beliebig sein, wobei die Anzahl in der Regel der Polzahl des Rotors entspricht.

In einer bevorzugten Ausführungsform der Erfindung sind die Erregerpole mittels Dauermagnetmaterial, insbesondere ein- oder mehrteiligen Permanentmagneten, ausgebildet. Die Permanentmagnete können dabei im magnetisierten oder unmagnetisierten Zustand in den Magnettaschen angeordnet werden.

Der Rotor wirkt mit einem Stator zusammen, wobei der Stator ein Flussleitmittel mit Wicklungsnuten zur Aufnahme einer ein- oder mehrphasigen Wicklung aufweist, wobei alle Wicklungsnuten die Nutzahl des Stators bilden. Als Nutteilung wird der Abstand von zwei Wicklungsnuten zueinander bezeichnet.

Vorzugsweise gilt für den Verdrehwinkel $\alpha$:

$$\alpha = k * \frac{360°}{p * N_1}$$

wobei

$p$      die Anzahl der Polpaare (Polpaarzahl) ist,

$k$      = {**0**, 1, 2, 3 ... p-1} (eine ganze Zahl) ist,

$N_1$      die Nutzahl des Stators (11) ist.

Die genannte Formel bezeichnet für jede Polpaarachse den individuellen Verdrehwinkel gegenüber einer komplett rotationssymmetrischen Anordnung der Erregerpole. Das heißt, beispielsweise bei einer Polpaarzahl drei und damit drei Polpaarachsen ist eine erste Polpaarachse nicht verdreht gegenüber einer imaginären Bezugspolpaarachse eines komplett rotationssymmetrischen Läufers mit Polpaarzahl drei. Für diese Polpaarachse gilt k = 0. Eine zweite Polpaarachse ist jedoch mit einem Verdrehwinkel von $1*\frac{360°}{3*N_1}$ ausgeführt, das heißt k=1. Schließlich ist die dritte Polpaarachse mit dem doppelten Wert des zuvor genannten Verdrehwinkels ausgeführt, da für sie k = 2 gilt. Auch der Verdrehwinkel der dritten Polpaarachse ist in Bezug auf eine imaginäre Polpaarachse zu sehen, die sich bei einer komplett rotationssymmetrischen Anordnung ergäbe.

Somit ist für jedes Polpaar und damit für jede Polpaarachse genau ein Wert aus der Menge von k zu verwenden. Die Menge von k beinhaltet ganze Zahlen, wobei die größte ganze Zahl p-1 ist.

In einer weiteren Ausgestaltung der Erfindung kann bei hohen Polpaarzahlen, d.h. bei einer Anzahl an Polpaaren größer sechs ($p$>6) bzw. Anzahl an Erregerpolen größer 12, eine Vergröberung des Verfahrens, d.h. der Berechnung nach der genannten mathematischen Beziehung, vorteilhaft gegen die Bildung von Subharmonischen sein.

Dabei wird bei der Berechnung anstelle der Polpaarzahl $p$ eine Ersatzpolpaarzahl $p'$ eingesetzt. Die Ersatzpolpaarzahl $p'$ stellt eine ganzzahlige geteilte Zahl zur Berechnung dar. Beispielsweise ergibt sich die Ersatzpolpaarzahl $p'$ bei Teilung der Polpaarzahl $p$ durch zwei, wobei in diesem Fall für $p'$ gilt: $p'=p/2$. Die Polpaarzahl $p$ kann jedoch durch jede beliebige Zahl geteilt werden, wobei Ziel eine ganze Zahl für die Ersatzpolpaarzahl $p'$ ist.

Die Wahl einer Ersatzpolpaarzahl $p'$ verringert zwar einerseits den Effekt der Rastmomentreduktion, verbessert aber die Toleranz gegenüber Unsymmetrien.

Erfindungsgemäß ist ferner die Möglichkeit gegeben, dass von dem genauen berechneten Verdrehwinkel ($\alpha$) abgewichen werden kann, ohne dass der Effekt der Rastmomentverringerung wesentlichen beeinträchtigt wird. Die Abweichung vom Verdrehwinkel liegt dabei im Bereich von +/- 10% in Bezug auf den berechneten Verdrehwinkel ($\alpha$). Für die Abweichung ($\alpha_{Abweichung}$) vom Verdrehwinkel ($\alpha$) gilt insbesondere:

$$\alpha_{Abweichung} = +/- 0{,}1 * \frac{360°}{p * N_1} \quad \text{bzw.}$$

$$\alpha_{Abweichung} = +/- 0{,}1 * \frac{360°}{p' * N_1} \,.$$

Die erfindungsgemäße elektrische Maschine weist einen Stator und einen Rotor auf, wobei Stator und Rotor elektromagnetisch zusammenwirken und durch einen Luftspalt voneinander beabstandet sind. Dabei ist der Rotor wie erfindungsgemäß beschrieben ausgebildet. Die elektrische Maschine ist als permanentmagneterregte Synchronmaschine ausgebildet.

In der nachfolgenden Beschreibung werden weitere Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:

FIG 1    eine elektrische Maschine mit einem vierpoligen Rotor gemäß Stand der Technik, und

FIG 2    eine elektrische Maschine mit einem vierpoligen Rotor gemäß der Erfindung.

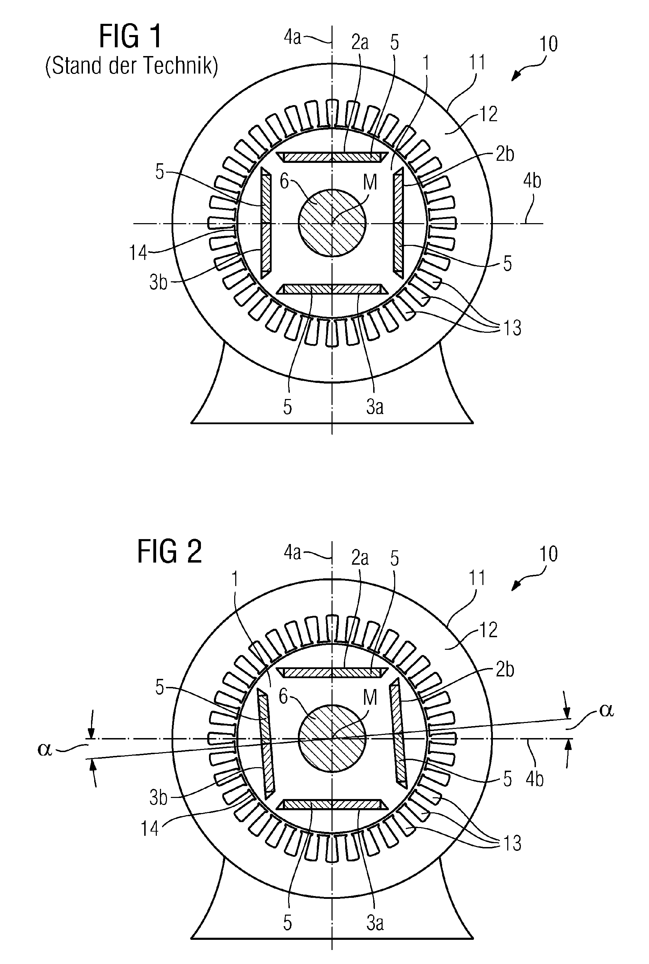

FIG 1 zeigt eine elektrische Maschine 10 mit einem vierpoligen Rotor 1 gemäß dem Stand der Technik. Die elektrische Maschine 10 ist in einer Schnittdarstellung von vorn gezeigt und weist den Rotor 1 und den Stator 11 auf, welche durch den Luftspalt 14 beabstandet sind und elektromagnetisch zusammenwirken.

Der Stator 11 weist ein Flussleitmittel 12 auf, welches in der Regel als Blechpaket, bestehend aus vielen Einzelblechen, ausgebildet ist. Die Einzelbleche sind in die Zeichenebene hinein hintereinander angeordnet. Ferner weist der Stator 11 die Wicklungsnuten 13 auf, die zur Aufnahme einer ein- oder mehrphasigen Wicklung dienen (eine Wicklung ist nicht dargestellt). Im vorliegenden Ausführungsbeispiel weist der Stator 11 eine Anzahl von 36 Wicklungsnuten 13 auf. Der Stator 11 kann aber jede beliebige Anzahl an Wicklungsnuten 13 aufweisen.

Der Rotor 1 ist beispielhaft als vierpoliger Rotor 1 ausgebildet, wobei die Erregerpole 2a, 2b, 3a, 3b symmetrisch an den Polpaarachsen 4a und 4b angeordnet sind. Die Polpaarachsen 4a und 4b sind im rechten Winkel zueinander angeordnet und deren Schnittpunkt liegt im Mittelpunkt M des Rotors 1.

Die Erregerpole 2a, 2b, 3a, 3b sind mittels Permanentmagneten 5 ausgebildet, welche in Magnettaschen des Rotors 1 eingelassen sind. Die Permanentmagnete 5 können sowohl ein- als auch mehrteilig ausgebildet sein und im magnetisierten oder unmagnetisierten Zustand im Rotor 1 angeordnet werden.

Der Rotor 1 ist an einer Welle 6 angeordnet, beispielsweise aufgepresst oder aufgeschrumpft. Der Rotor 1 ist in der Regel als Blechpaket, bestehend aus vielen Einzelblechen, ausgebildet. Die Einzelbleche sind in die Zeichenebene hinein hintereinander angeordnet. Der Rotor 1 könnte jedoch auch massiv, z.B. aus Eisen, ausgebildet sein.

Wie FIG 1 zu entnehmen ist, sind die Erregerpole 2a, 2b, 3a, 3b symmetrisch ohne jegliche Verdrehung angeordnet.

FIG 2 zeigt eine elektrische Maschine 10 mit einem vierpoligen Rotor 1 gemäß der Erfindung. Die elektrische Maschine 10 ist in einer Schnittdarstellung von vorn gezeigt und entspricht in ihren wesentlichen Elementen der Ausführung gemäß FIG 1.

In FIG 2 ist gut zu erkennen, dass die gegenüberliegenden Erregerpole 2b und 3b verdreht in Bezug auf die Polpaarachse 4b angeordnet sind. Im Hinblick auf die Erfindung bilden diese zwei gegenüberliegenden Erregerpole 2b und 3b ein Polpaar. Dabei sind die zwei gegenüberliegenden Erregerpole 2b, 3b derart verdreht angeordnet, dass sämtliche Erregerpole 2a, 2b, 3a, 3b des Rotors 1 punktsymmetrisch im Rotor 1 angeordnet sind. Den Drehpunkt stellt der Mittelpunkt M dar.

Der Verdrehwinkel $\alpha$ ist grundsätzlich beliebig wählbar und zweckmäßigerweise im Gradmaß (°) angegeben. Der Scheitelpunkt des Verdrehwinkels $\alpha$ liegt auf dem Mittelpunkt M, wobei M gleichzeitig Drehpunkt für die Drehung der Erregerpole 2b und 3b ist.

Für den Verdrehwinkel $\alpha$ gilt:

$$\alpha = k * \frac{360°}{p * N_1}$$

wobei

$p$      die Anzahl der Polpaare (Polpaarzahl) ist,
$k$      = {0, 1, 2, 3 ... p-1} (eine ganze Zahl) ist,
$N_1$      die Nutzahl des Stators (11) ist.

Für das vorliegende Beispiel berechnet sich der Verdrehwinkel $\alpha$ wie folgt:

4

$$\alpha = 1 * \frac{360°}{2 * 36} = 5°.$$

Es ergibt sich eine Drehung für die Erregerpole 2b und 3b um jeweils 5°.

Die Verdrehung erfolgt relativ zu einer gewählten Bezugspolpaarachse, welche im vorliegenden Fall die strichpunktierte Linie ist.

Ferner ist die Möglichkeit gegeben, dass von dem genauen berechneten Verdrehwinkel $\alpha$ abgewichen werden kann, ohne dass der Effekt der Rastmomentverringerung wesentlichen beeinträchtigt wird. Die Abweichung vom Verdrehwinkel $\alpha$ liegt dabei im Bereich von +/- 10% in Bezug auf den berechneten Verdrehwinkel. Die Abweichung für das vorliegende Beispiel liegt bei +/- 0,5°. Der Verdrehwinkel $\alpha$ kann somit im Bereich von 4,5° bis 5,5° liegen.

**Patentansprüche**

1.  Rotor (1) für eine elektrische Maschine (10), wobei

    - der Rotor eine Polpaarzahl (p) aufweist, die mindestens zwei ist,
    - jeweils zwei Erregerpole (2a,2b,3a,3b) bezüglich der Rotationsachse des Rotors im Wesentlichen diametral angeordnet sind und ein Polpaar bilden, wobei die jeweils zwei Erregerpole (2a,2b,3a,3b) eine gemeinsame Polpaarachse (4a,4b) aufweisen, die für beide Erregerpole eine Symmetrieachse darstellt,

    **dadurch gekennzeichnet,**
    **dass** eine erste Polpaarachse (4a) bezüglich einer zweiten Polpaarachse (4b) deren Erregerpole (2a,2b,3a,3b) zu den Erregerpolen (2a,2b,3a,3b) der ersten Polpaarachse (4a) benachbart angeordnet sind, um einen Winkel versetzt angeordnet sind, der von $\frac{360°}{2*p}$ um einen Verdrehwinkel ($\alpha$) abweicht.

2.  Rotor (1) nach Anspruch 1, **dadurch gekennzeichnet, dass** die Erregerpole (2a,2b, 3a,3b) mittels Dauermagnetmaterial, insbesondere ein- oder mehrteiligen Permanentmagneten (5), ausgebildet sind.

3.  Rotor (1) nach einem der Ansprüche 1 oder 2, **dadurc h gekennzeichnet, dass** der Rotor (1) mit einem Stator (11) zusammenwirkt und der Stator (11) ein Flussleitmittel (12) mit Wicklungsnuten (13) zur Aufnahme einer ein- oder mehrphasigen Wicklung aufweist, wobei alle Wicklungsnuten (13) die Nutzahl ($N_1$) des Stators (11) bilden, wobei für den Verdrehwinkel ($\alpha$) gilt:

$$\alpha = k * \frac{360°}{p * N_1}$$

    wobei

    $p$ die Anzahl der Polpaare (Polpaarzahl) ist,
    $k$ = 0,1,2,3...p-1 (eine ganze Zahl) ist,
    $N_1$ die Nutzahl des Stators (11) ist.

4.  Rotor (1) nach einem der vorhergehenden Ansprüche,
    **dadurch gekennzeichnet, dass** bei einer Anzahl an Polpaaren (p) größer sechs (p>6) für den Verdrehwinkel ($\alpha$) gilt:

$$\alpha = k * \frac{360°}{p'*N_1}$$

wobei

p' = eine ganzzahlige Ersatzpolpaarzahl ist, die sich durch Division der Polpaarzahl (p) mit einer ganzen Zahl ergibt,
k = 0,1,2,3...p-1 (eine ganze Zahl) ist,
$N_1$ die Nutzahl des Stators (11) ist.

5. Rotor (1) nach einem der Ansprüche 3 oder 4,
**dadurch gekennzeichnet, dass** der Verdrehwinkel (α) eine Toleranz im Bereich von

$$\alpha_{Abweichung} = +/- 0,1 * \frac{360°}{p * N_1}$$

aufweist.

6. Elektrische Maschine (10) mit einem Stator (11) und einem Rotor (1), wobei Stator (11) und Rotor (1) zusammenwirken und durch einen Luftspalt (14) voneinander beabstandet sind,
**dadurch gekennzeichnet, dass** der Rotor (1) nach einem oder mehreren der Ansprüche 1 bis 5 ausgebildet ist.

FIG 1
(Stand der Technik)

FIG 2